# EUROPEAN PATENT APPLICATION

(11) **EP 4 310 154 A1**
(43) Date of publication of application: **24.01.2024**
(21) Application number: 22770826.0
(22) Date of filing: 15.01.2022
(51) Int. Cl.: C09D 11/101

(54) **ACTINIC-RAY-CURABLE INK COMPOSITION AND PRODUCTION METHOD THEREFOR**

(30) Priority: 16.03.2021 JP 2021042972; 19.08.2021 JP 2021134167
(71) Applicant: Sakata INX Corporation, Osaka-shi, Osaka 550-0002 (JP)
(72) Inventor: OMI, Naoki, Osaka-shi, Osaka 550-0002 (JP); HISHINUMA, Keishiro, Osaka-shi, Osaka 550-0002 (JP); SAITO, Kota, Osaka-shi, Osaka 550-0002 (JP)
(74) Representative: V.O.
(86) International application number: PCT/JP2022/001250
(87) International publication number: WO 2022/196064

(57) **Abstract**

[Object]

To provide an actinic-ray-curable ink composition that has high flowability and can thus achieve superior gloss on printed matter:

[Solution]

An actinic-ray-curable ink composition which contains a compound having an ethylenically unsaturated bond and epoxidized oil or fat is employed, wherein the epoxidized oil or fat has a peroxide value of 1 meq/kg or more. Such epoxidized oil or fat can be prepared through epoxidation of, for example, waste edible oil after being used in cooking fried foods by a known means. Accordingly, the present invention can achieve not only the object described above but also the effective utilization of wastes.

## Description

### TECHNICAL FIELD

The present invention relates to an actinic-ray-curable ink composition and a process for producing such an ink composition.

### BACKGROUND ART

In the case of printing with ink compositions, various printing processes are appropriately selected depending on the materials and shapes of print targets, and ink compositions having appropriate properties are also selected in accordance with such printing processes. For example, in an offset printing process with a lithographic printing plate on flat paper sheets, high-viscosity ink compositions containing vegetable oil or mineral oil are employed. In a flexographic printing process with a rubbery relief printing plate on cardboard sheets, aqueous ink compositions having remarkably high flowability are employed. It is also well known that various printing processes, such as gravure printing, screen printing, letterpress printing and inkjet printing, are appropriately selected and put in practice.

In printing processes, one essential step for forming images, besides fixation of ink compositions to print targets, is drying of the ink compositions after printing. Insufficient drying causes the following problem: Since the ink composition immediately after printing is not sufficiently fixed on the surface of the target, the ink composition adheres to fingers coming in contact with the target, and printed images will be blurred or contaminated when the targets are rubbed. Accordingly, the ink compositions should be sufficiently fixed or dried on the surfaces of the targets before the printed targets after printing are transferred to a subsequent step. A variety of steps of fixing or drying the ink compositions after printing are in practical use depending on the type of ink composition used. Examples of such steps include permeation of the solvents into the printed targets, evaporation of the solvents from the printed targets, and oxidative polymerization of ingredients contained in the ink compositions. Since all the drying steps consume considerable time, the time required for the drying steps cannot be ignored for high printing rates due to technological advances in recent years.

In such circumstances, printing processes with actinic-ray-curable ink compositions have recently been developed. In such an actinic-ray-curable ink composition, the ingredients contained in the ink composition can be polymerized by irradiation with ultraviolet rays or electron beams to achieve the drying. Since the drying time is significantly short, the printing with such an ink composition can meet the demand for promptly transferring of printed matter to a subsequent step. Examples of the ink compositions suitable for such a drying manner include an ink composition disclosed in PTL 1 for an offset printing process, and an ink composition disclosed in PTL 2 for a resin relief printing process.

In recent years, the activities for reductions in environmental loads have been developed in various industrial and business categories, and the activities to promote reductions in environmental loads have been practiced also in the printing industry from various viewpoints. From such a background, in the printing process with ultraviolet rays among various processes using the actinic-ray-curable ink compositions as described above, the conventional ultraviolet lamps, which cause large power consumption and the generation of ozone due to short-wave ultraviolet rays are being replaced with ultraviolet LED lamps or low-power ultraviolet lamps, which cause smaller power consumption and less generation of ozone. In the case that such low-power ultraviolet lamps are employed, actinic-ray-curable ink compositions will need to be designed to exhibit superior curability even with low-illuminance ultraviolet rays. In this regard, PLT 3 discloses that, in an ink composition where an ingredient having ethylenically unsaturated bonds is cured by a radical polymerization system, further addition of epoxidized vegetable oil into the ink composition can enhance the curability with low-illuminance ultraviolet rays. In view of the general knowledge that an epoxy compound has no radical polymerization ability, such results can be regarded as unexpected ones.

### CITATION LIST

### PATENT LITERATURES

PTL1: JP 5477995B
PTL2: JP 2004-161812A
PTL3: JP 2018-115223A

### BRIEF DESCRIPTION OF THE INVENTION

### PROBLEMS TO BE SOLVED

As described above, although the printing with an actinic-ray-curable ink composition can achieve quick drying of printed matter, it has an inevitable problem in that the gloss of printed matter tends to be reduced. In the case of printing on print media including paper sheets, the ink composition is transferred from the surface of a blanket or printing plate to the surface of each print medium. In such a transfer step, the ink composition is split between the surface of a blanket or printing plate and the surface of the print medium to be distributed to both surfaces. The surfaces of the ink composition immediately after splitting have fine irregularities accompanied with the splitting, and the flowability of the ink composition can smooth down the irregularities over time. This step is called "leveling", which relatively rapidly occurs after printing, and fine irregularities on the surface of the printed matter are eliminated through the levelling, resulting in high gloss. However, the actinic-ray-curable ink composition immediately changes into a high molecular weight by irradiation with actinic rays after being transferred to the print medium, and thereby the loss in flowability occurs due to a steep increase in viscosity, resulting in an insufficient time for leveling. This mechanism is presumed to lead to a decrease in gloss as described above. Printed matter having low gloss is inferior in appearance to printed matter having high gloss. In particular, such low gloss leads to a decrease in commercial value in offset printing, which requires aesthetic properties of printed matter. In order to solve such problems, it should be necessary to impart high flowability to the ink composition to cause rapid leveling on the surface of printed matter.

The present invention has been made in view of the above circumstances, and it is an object of the present invention to provide an actinic-ray-curable ink composition that has high flowability and can thus achieve high gloss on printed matter.

### MEANS TO SOLVE PROBLEMS

As a result of intensive studies to solve the above problems, the present inventors have focused on oxidized vegetable oil, such as waste edible oil after being used in food processing of, for example, fried foods. Well known vegetable oil is a mixture of ester compounds of fatty acids and glycerol, and such fatty acids include unsaturated fatty acids, such as oleic acid and linoleic acid. In the case that such unsaturated fatty acids are placed in a high-temperature state, such as the environment in cooking of fried foods, oxygen is attached to some of the unsaturated bonds of the fatty acids to generate hydroperoxide groups (-OOH) in the molecule. The hydroperoxide group is a highly polar substituent, which is obvious from its structure, thereby oxidized vegetable oil, such as waste edible oil, has higher polarity compared to fresh vegetable oil.

In the meantime, the actinic-ray-curable ink composition contains, as a main ingredient, a compound having an ethylenically unsaturated bond so as to have curability. As such a compound having an ethylenically unsaturated bond, a compound having high polarity is generally selected, such as a (meth)acrylate ester compound. Accordingly, this type of ink composition has high polarity as a whole, and the oxidized vegetable oil, which is oil or fat having high polarity as described above, has superior compatibility with the actinic-ray-curable ink composition, which is also a composition having high polarity. In the case that such oxidized vegetable oil is employed as a constituent of the ink composition, it is anticipated that its high compatibility with the ink composition can cause an enhancement in compatibility of entire ink composition and flowability of the ink composition, resulting in superior levelling, which leads to printed matter having high gloss.

In order to employ oxidized oil or fat compatible with actinic-ray-curable ink compositions as a constituent of this type of ink composition, the present inventors have found the epoxidation involving incorporation of epoxy groups into the unsaturated bonds remaining in the oxidized oil or fat, and have proposed epoxidized oil or fat as disclosed in PLT 3 described above. The use of such oil or fat as a constituent of the ink composition can not only achieve advantages, such as high flowability and improved gloss of printed matter, but also increase the biomass count, which indicates a proportion of recyclable ingredients in the ink composition, resulting in a reduction in the environmental loads of the ink composition due to the reuse of waste edible oil. In addition, the advantages in the present invention, such as high flowability and improved gloss, can be expected to be similarly given by any oil or fat that forms peroxides to generate hydroperoxide groups. From such viewpoints, any epoxidized oil or fat having a peroxide value above a certain level can be used in addition to waste edible oil. The present invention has been completed based on such findings, and provides the following Aspects:
Aspect (1): The present invention provides an actinic-ray-curable ink composition comprising a compound having an ethylenically unsaturated bond and epoxidized oil or fat, wherein the epoxidized oil or fat has a peroxide value of 1 meq/kg or more.
Aspect (2): The present invention also provides the actinic-ray-curable ink composition according to Aspect (1), wherein the epoxidized oil or fat has an acid value of 0.1 mg KOH/g to 100 mg KOH/g.
Aspect (3): The present invention also provides the actinic-ray-curable ink composition according to Aspect (1) or (2), wherein the epoxidized oil or fat has a peroxide value of 1 meq/kg to 1,000 meq/kg.
Aspect (4): The present invention also provides the actinic-ray-curable ink composition according to any one of Aspects (1) to (3), wherein the epoxidized oil or fat has an oxirane oxygen concentration of 0.5% to 50%.
Aspect (5): The present invention also provides the actinic-ray-curable ink composition according to any one of Aspects (1) to (4), wherein the ink composition contains 1 % by mass to 30% by mass of the epoxidized oil or fat to the entire ink composition.
Aspect (6): The present invention also provides the actinic-ray-curable ink composition according to any one of Aspects (1) to (5), wherein the epoxidized oil or fat is epoxy-modified waste edible oil.
Aspect (7): The present invention also provides a process for producing an actinic-ray-curable ink composition, wherein epoxidized oil or fat prepared through epoxidation of oil or fat having a peroxide value of 1 meq/kg or more is used as part of ingredients constituting the ink composition.
Aspect (8): The present invention also provides the process for producing an actinic-ray-curable ink composition according to Aspect (7), wherein the oil or fat is waste edible oil.

### ADVANTAGES OF THE INVENTION

The present invention provides an actinic-ray-curable ink composition that has high flowability and can thus achieve high gloss on printed matter.

### EMBODIMENTS OF THE INVENTION

One embodiment of an actinic-ray-curable ink composition in the present invention and one embodiment of a process for producing an actinic-ray-curable ink composition in the present invention will now be described. It should be noted that the present invention is not limited to the following embodiments or aspects, and can be implemented with appropriate modifications within the scope of the present invention.

### <Actinic-ray-curable ink composition>

The actinic-ray-curable ink composition according to the present invention has curability by irradiation with actinic rays, such as ultraviolet rays and electron beams. As will be described later, the inventive ink composition contains a compound (such as a monomer or an oligomer) having ethylenically unsaturated bonds, and can be cured through polymerization of the compound having ethylenically unsaturated bonds due to radicals generated in the ink composition upon the irradiation with actinic rays. Accordingly, the irradiation of a sticky ink composition on the surface of printed matter with actinic rays immediately after printing causes the ink composition to be readily cured into films, which are in a dry state (or tack-free state). In the case that ultraviolet rays are employed as the actinic rays, a photopolymerization initiator described later is added to the ink composition, and the photopolymerization initiator undergoes intramolecular cleavage upon the irradiation with ultraviolet rays to generate radicals, thereby curing the ink composition. In the case that electron beams are employed as the actinic rays, various ingredients contained in the ink composition undergo intramolecular cleavage upon the irradiation with electron beams to generate radicals, thereby curing the ink composition. Accordingly, in the case that electron beams are selected as the actinic rays, the photopolymerization initiator is not an essential ingredient in the ink composition.

Examples of the actinic rays employed in the curing of the inventive ink composition include ultraviolet rays and electron beams. Particularly preferred actinic rays are ultraviolet rays from the viewpoint of low machine cost and ease for handling. However, the incorporation of electron beam generators into printing devices has been recently progressed, thereby preferred actinic rays also include electron beams from the viewpoint of such a progress. In the use of ultraviolet rays as the actinic rays, the wavelength of the ultraviolet rays may be appropriately determined depending on the absorption wavelength of the photopolymerization initiator to be employed, and it may be 400 nm or less. Examples of light sources that generate such ultraviolet rays in an ultraviolet irradiator include metal halide lamps, high-pressure mercury lamps, excimer lamps containing rare gas, and ultraviolet light emitting diodes (i.e., ultraviolet LEDs). In the use of electron beams as the actinic rays, any accelerator in an electron beam irradiator can be employed for generating the electron beams. Examples of such accelerators include a Cockroft-Walton accelerator, a Van de Graaff accelerator, and an accelerator with a resonant transformer. The electron beams have an energy of preferably 50 to 1,000 eV, more preferably 100 to 300 eV. Regardless of the type of actinic rays, the dose of irradiation should be appropriately adjusted depending on the degree of curing of the ink composition.

Any printing process can be employed in the use of the inventive ink composition. Examples of such printing processes include offset printing, waterless offset printing, letterpress printing, rubbery letterpress printing, flexographic printing, gravure printing and inkjet printing. Properties, such as the viscosity of the ink composition, may be appropriately adjusted depending on the printing process to be employed. Preferred printing processes in the use of the inventive ink composition include offset printing and waterless offset printing.

The inventive ink composition contains a compound having ethylenically unsaturated bonds and epoxidized oil or fat, wherein the epoxidized oil or fat has a peroxide value of 1 meq/kg or more. In the case that ultraviolet rays are employed as the actinic rays, the inventive ink composition further contains a photopolymerization initiator. The inventive ink composition may also contain coloring ingredients (in the present invention, the coloring ingredients may include those that impart white or metallic color to the ink composition). In the case that the inventive ink composition contains coloring ingredients, the ink composition can be used for printing, for example, images and characters, while in the case that the inventive ink composition does not contain coloring ingredients, the ink composition can be used in other applications, such as coating. These ingredients will now be described in sequence.

### [Compound having one or more ethylenically unsaturated bonds]

The compound having one or more ethylenically unsaturated bonds is an ingredient called a monomer or an oligomer that is polymerized by radicals generated in the ink composition into a high molecular weight. Various polymers having ethylenically unsaturated bonds, which have a higher molecular weight than oligomers, are also commercially available. Such polymers can also be crosslinked with themselves or with the monomers or oligomers into a higher molecular weight. Such polymers may also be used as compounds having ethylenically unsaturated bonds together with the monomers or oligomers. As already described, such radicals are generated from the photopolymerization initiator irradiated with ultraviolet rays or from the constituent of the ink composition irradiated with electron beams.

The monomer having one or more ethylenically unsaturated bonds can be polymerized into a high molecular weight, as described above. In many cases, the monomer is a liquid ingredient having a relatively low molecular weight before polymerization and is also used as a solvent for dissolving a resin ingredient into a varnish and for adjusting the viscosity of the ink composition. Examples of such monomers include monofunctional monomers having one ethylenically unsaturated bond in the molecule and bi- or higher functional monomers having two or more ethylenically unsaturated bonds in the molecule. The bi- or higher functional monomers can mutually crosslink during the curing of the ink composition, thereby contributing to an increase in curing rate and formation of a rigid film. The monofunctional monomer has no crosslinking ability as described above, thereby contributing to a reduction in curing contraction due to crosslinking. These monomers can be used in combination of different types as needed.

Examples of the monofunctional monomers include alkyl acrylates, such as methyl (meth)acrylate, ethyl (meth)acrylate, butyl (meth)acrylate, hexyl (meth)acrylate, octyl (meth)acrylate, dodecyl (meth)acrylate; and (meth)acrylate, ethylene oxide adduct (meth)acrylate, propylene oxide adduct (meth)acrylate, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, di(ethylene glycol) mono(meth)acrylate, tri(ethylene glycol) mono(meth)acrylate, poly(ethylene glycol) mono(meth)acrylate, di(propylene glycol) mono(meth)acrylate, polypropylene glycol) mono(meth)acrylate, glycerol mono(meth)acrylate, acryoloxyethyl phthalate, 2-(meth)acryloyloxyethyl-2-hydroxyethyl phthalate, 2-(meth)acryloyloxypropyl phthalate, β-carboxyethyl (meth)acrylate, (meth)acrylate dimer, w-carboxypolycaprolactone mono(meth)acrylate, dimethylaminoethyl (meth)acrylate, diethylaminoethyl (meth)acrylate, N-vinylpyrrolidone, N-vinylformamide, and (meth)acryloylmorpholine. These monofunctional monomers may be used alone or in combination. Throughout the specification, the term "(meth)acrylate" indicates "acrylate and/or methacrylate", and the term "(meth)acrylic acid" indicates "acrylic acid and/or methacrylic acid".

Examples of the di- or higher functional monomers include difunctional monomers, such as ethylene glycol di(meth)acrylate, di(ethylene glycol) di(meth)acrylate, tri(ethylene glycol) di(meth)acrylate, poly(ethylene glycol) di(meth)acrylate, propylene glycol di(meth)acrylate, di(propylene glycol) di(meth)acrylate, tri(propylene glycol) di(meth)acrylate, polypropylene glycol) di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaplolactonate di(meth)acrylate, bisphenol A tetra(ethylene oxide) adduct di(meth)acrylate, bisphenol F tetra(ethylene oxide) adduct di(meth)acrylate, bisphenol S tetra(ethylene oxide) adduct di(meth)acrylate, hydrogenated bisphenol A tetra(ethylene oxide) adduct di(meth)acrylate, hydrogenated bisphenol F tetra(ethylene oxide) adduct di(meth)acrylate, hydrogenated bisphenol A di(meth)acrylate, hydrogenated bisphenol F di(meth)acrylate, bisphenol A tetra(ethylene oxide) adduct dicaplolactonate di(meth)acrylate, and bisphenol F tetra(ethylene oxide) adduct dicaplolactonate di(meth)acrylate; and trifunctional monomers, such as glycerol tri(meth)acrylate, trimethylolpropane tri(meth)acrylate, trimethylolpropane tricaplolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and tetra- or higher functional monomers, such as trimethylolpropane tetra(meth)acrylate, pentaerythritol tetra(meth)acrylate, pentaerythritol tetracaplolactonate tetra(meth)acrylate, diglycerol tetra(meth)acrylate, ditrimethylolpropane tetra(meth)acrylate, ditrimethylolpropane tetracaplolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tridipentaerythritol hexa(meth)acrylate, tripentaerythritol hepta(meth)acrylate, tripentaerythritol octa(meth)acrylate, and tripentaerythritol poly(alkylene oxide) hepta(meth)acrylate. Among these monomers, preferred examples include trimethylolpropane triacrylate (TMPTA; trifunctional), ditrimethylolpropane tetraacrylate (DITMPTA; tetrafunctional), dipentaerythritol hexaacrylate (DPHA; hexafunctional), glycerol propoxytriacrylate (GPTA; trifunctional), and hexanediol diacrylate (HDDA; difunctional). These di- or higher functional monomers may be used alone or in combination.

Examples of other types of monomers include acrylates of epoxidized vegetable oils prepared through acrylic modification of epoxidized vegetable oils. These acrylates are compounds produced by ring-opening addition polymerization of (meth)acrylates to epoxy groups in the epoxidized vegetable oils prepared through epoxidation of double bonds in unsaturated vegetable oils with oxidizing agents, such as peracetic acid and perbenzoic acid. The unsaturated vegetable oil indicates triglyceride including at least one fatty acid having at least one carbon-carbon unsaturated bond. Examples of the unsaturated vegetable oils include hemp seed oil, linseed oil, perilla oil, oiticica oil, olive oil, cacao oil, kapok oil, kaya oil, mustard oil, apricot oil, tung oil, kukui oil, walnut oil, poppy oil, sesame oil, safflower oil, radish seed oil, soybean oil, hydnocarpus oil, camellia oil, corn oil, rapeseed oil, niger oil, rice-bran oil, palm oil, castor oil, sunflower oil, grape seed oil, almond oil, pine seed oil, cottonseed oil, coconut oil, peanut oil, and dehydrated castor oil. Since this type of monomer is derived from the vegetable oil, it serves to increase the amount of biomass ingredients in the ink composition. Several types of acrylates of epoxidized vegetable oils, which are commercially available, may be used.

The oligomer is a polymerized ingredient that has a high molecular weight, as described above. Since the oligomer inherently has a relatively high molecular weight, it can be used for imparting appropriate viscosity and elasticity to the ink composition. Examples of the oligomers include epoxy-modified (meth)acrylates, such as esters formed by a reaction of (meth)acrylates with hydroxyl groups generated after opening of the epoxy rings contained in epoxy compounds, such as epoxy resins, using acids or bases; rosin-modified epoxidized acrylates; polyether-modified (meth)acrylates, such as esters formed by a reaction of (meth)acrylate with terminal hydroxyl groups of condensates of dibasic acids and diols; polyether-modified (meth)acrylates, such as esters formed by a reaction of (meth)acrylates with terminal hydroxyl groups of polyether compounds; and urethane-modified (meth)acrylates, such as esters formed by a reaction of (meth)acrylates with terminal hydroxyl groups of condensates of polyisocyanate compounds and polyol compounds. Such oligomers are commercially available under trade names, for example, Evecryl series available from Daicel Cytech Co., Ltd.; CN and SR series available from Sartomer Co., Ltd.; Aronix M-6000 series, 7000 series, 8000 series, Aronix M-1100, Aronix M-1200, and Aronix M-1600 available from Toagosei Co., Ltd.; and NK Oligo available from Shin-Nakamura Chemical Co., Ltd. These oligomers may be used alone or in combination.

The polymer having ethylenically unsaturated bonds is an ingredient that increases the molecular weight together with the monomers and oligomers described above. Since the polymer has a high molecular weight even before irradiation with actinic rays, it serves an enhancement in viscoelasticity of the ink composition. Such a polymer is used, for example, in a form of solution or dispersion in monomers, which are low-viscous liquid. Examples of the polymers having ethylenically unsaturated bonds include poly(diallyl phthalate); acrylic resins including unreacted and unsaturated groups; and acryl-modified phenol resins. Among these polymers, poly(diallyl phthalate) can be preferably used because of its particularly superior compatibility with the monomers or oligomers described above.

The content of the compound having one or more ethylenically unsaturated bonds in the ink composition is preferably 30 to 70% by mass, more preferably 40 to 60% by mass. Such a range of content of the compound having one or more ethylenically unsaturated bonds results in compatibility between high curability and superior printability. The content of the polymer having ethylenically unsaturated bonds is preferably 0 to 50% by mass, more preferably 0 to 30% by mass, further more preferably 0 to 20% by mass. Such a range of content of the polymer preferably results in high curability of the ink composition, as well as a reduction in misting through imparting appropriate viscoelasticity to the ink composition.

### [Epoxidized oil or fat]

The inventive ink composition is characterized by containing of epoxidized oil or fat having a peroxide value of 1 meq/kg or more. As already described, in oils or fats including waste edible oils, such as vegetable oils exposed at high temperatures, unsaturated bonds in moieties of fatty acid are oxidized to generate hydroperoxide groups (i.e., -OOH) in the molecules. Since such hydroperoxide groups correspond to polar groups, oils or fats including waste edible oils exposed at high temperatures have higher polarity compared to fresh oils or fats, and exhibit high compatibility with each ingredient constituting the actinic-ray-curable ink composition. The ink composition containing the epoxidized oil or fat having the predetermined peroxide value according to the present invention therefore has superior flowability, resulting in high gloss on printed matter.

As described in PLT 3, in the case that ultraviolet rays are employed as actinic rays, it is known that the addition of epoxidized oil or fat as an ingredient of the ink composition can accelerate dryness of printed matter even in a small dose of irradiated ultraviolet. Similarly, the inventive ink composition containing epoxidized oil or fat can achieve superior dryness of printed matter even in a small dose of irradiated ultraviolet.

Epoxidized oil or fat is ester formed by a reaction of fatty acid having at least one epoxy group with alcohol. In general, "oil or fat" refers to ester of fatty acid and glycerol, in other words triglyceride. In the present invention, ester of fatty acid and alcohol (regardless of monool or polyol) is referred to as "oil or fat" in a broad sense. Examples of such alcohols include, but not limited to, alcohols having 1 to 14 carbon atoms, such as glycerol, methanol, ethanol, propanol, 2-propanol, and 2-ethylhexanol. In the case of polyhydric alcohol such as glycerol, at least one fatty acid having at least one epoxy group may be condensed (that is, form an ester bond) or multiple fatty acids having at least one epoxy group may be condensed with the polyhydric alcohol. In such a case, each of fatty acids may be independently selected. Examples of such oils or fats include triglycerides, such as vegetable oils and animal oils, as well as esters (i.e., fatty acid esters) formed by a reaction of fatty acids derived from, for example, vegetable oils and animal oils with monohydric or dihydric alcohols.

The present invention employs epoxidized oil or fat having a peroxide value of 1 meq/kg or more, as described above. The peroxide value is also called "POV", and it is an index representing the degree of oxidation of oils or fats. As is well known, the peroxide value can be determined by the titration of free iodine (I₂) with a 0.01N sodium thiosulfate solution after reaction of potassium iodide with the oil or fat to be measured. In other words, the hydroperoxide groups contained in the oil or fat are replaced with iodine molecules (I₂), and titrated with a sodium thiosulfate solution based on the behavior where iodine molecules react with starch to change into blue-purple color to measure the amount consumed by the titration until such color disappears and then determine the number of equivalents of the sodium thiosulfate. From the result of such titration, the milligram equivalent (meq) of the peroxide contained in 1 kg of oil or fat is calculated to be the peroxide value (unit: meq/kg).

The upper limit of peroxide value of the epoxidized oil or fat is preferably about 1,000 meq/kg, more preferably about 800 meq/kg, further more preferably about 700 meq/kg. The lower limit of peroxide value of the epoxidized oil or fat is 1 meq/kg as described above, but preferably about 10 meq/kg, more preferably about 30 meq/kg.

In the meantime, oils or fats exposed or aged at high temperatures are known to be partially decomposed to have some acid value (this phenomenon is called "rancidity"). Similar to the hydroperoxide groups described above, the acidic substituents that impart some acid value also have high polarity, and oils or fats rich in such groups exhibit high compatibility with actinic-ray-curable ink compositions. Accordingly, the epoxidized oil or fat employed in the present invention preferably has a certain level of acid value. From such a viewpoint, the epoxidized oil or fat has an acid value of preferably 0.1 mg KOH/g to 100 mg KOH/g, more preferably 0.5 mg KOH/g to 50 mg KOH/g, further more preferably 0.5 mg KOH/g to 25 mg KOH/g.

An epoxy group is a three-membered cyclic ether (also called "oxirane" or "alkylene oxide") where an oxygen atom is attached to both of the two carbon atoms that are bonded to each other. Examples of epoxidized oil or fat include epoxidized soybean oil (ESO), epoxidized corn oil, epoxidized sunflower oil, epoxidized linseed oil, epoxidized canola oil, epoxidized rapeseed oil, epoxidized safflower oil, epoxidized tall oil, epoxidized tung oil, epoxidized fish oil, epoxidized beef tallow oil, epoxidized castor oil, epoxidized methyl stearate, epoxidized butyl stearate, epoxidized 2-ethylhexyl stearate, epoxidized stearyl stearate, 3,4-epoxycyclohexylmethyl-3,4-epoxycyclohexanecarboxylate epoxidized soybean oil, epoxidized propylene glycol dioleate, epoxidized palm oil, and epoxidized fatty acid methyl ester.

Epoxidized oils or fats can be prepared through various processes using oils or fats, such as waste edible oils described above, as raw materials. For example, the epoxidized oil or fat where the oil or fat is triglyceride can be prepared by oxidization of vegetable oil or animal oil having unsaturated bonds in the fatty acid moieties with an appropriate oxidizing agent or peroxide into an epoxy-modified oil. In addition, the epoxidized oil or fat where the oil or fat is not triglyceride can be prepared by esterification, transesterification or ester exchange reaction of fatty acid having unsaturated bonds with alcohol (regardless of monool or polyol) into fatty acid ester, followed by oxidization of such fatty acid ester with an appropriate oxidizing agent or peroxide. Such processes are merely exemplary, and other processes can also be employed. The oils or fats used as raw materials may be ones exposed at high temperatures, such as waste edible oil, or commercially available vegetable oils oxidized by means of heating so as to have a predetermined peroxide value.

Oils or fats to be subjected to epoxidation include edible oils, such as salad oil, corn oil, olive oil, soybean oil, maize oil, sunflower oil, canola oil, rapeseed oil, safflower oil, fish oil, and beef tallow oil, as well as linseed oil, tung oil, tall oil, and castor oil. Such oils or fats to be subjected to epoxidation also include fatty acid esters prepared by transesterification of the oils or fats described above. As already described, the epoxidized oils or fats according to the present invention may be derived from waste edible oils used in heat-cooking. Examples of such waste edible oils include used edible oils after cooking of side dishes in eating-houses, fast food shops, restaurants, convenience stores or supermarkets; used edible oils after cooking in homes; and discarded edible oils after being heat-treated at high temperatures for cooking fried chicken, fried potatoes, or tempura. The use of such epoxidized oils or fats derived from waste edible oils in the inventive ink composition can lead to effective utilization of food wastes and great reductions in environmental loads. Moreover, the waste edible oils are not limited to those used in cooking as described above, and they may be, for example, edible oils that are highly oxidized after being left for a long time under direct sunlight. The waste edible oils may also be procured from the recyclers who collect waste edible oils from, for example, eating-houses and recycle them.

The oxirane oxygen concentration, which represents the content of epoxy groups contained in the epoxidized oil or fat, is preferably 0.5% to 50%, more preferably 0.5% to 25%, further more preferably 1% to 10%.

The content of epoxidized oil or fat in the ink composition is preferably 1% by mass to 30% by mass. Such a range of content of the epoxidized oil or fat in the ink composition can result in superior curability of ink and high gloss of printed matter. The content of epoxidized oil or fat in the ink composition is more prefarably1% by mass to 20% by mass, further more preferably 1% by mass to 15% by mass.

### [Photopolymerization initiator]

The photopolymerization initiator is an ingredient that generates radicals by irradiation with ultraviolet rays, and the resultant radicals polymerize the compound having one or more ethylenically unsaturated bonds described above, thereby curing the ink composition. The photopolymerization initiator may be any material that generates radicals by irradiation with ultraviolet rays. The photopolymerization initiator is an essential ingredient for curing the ink composition in the case that ultraviolet rays are employed as the actinic rays, but is a non-essential or optional ingredient in the case that electron beams are employed as the actinic rays.

Examples of the photopolymerization initiators include benzophenone, diethylthioxanthone, 2-methyl-1-(4-methylthio)phenyl-2-morpholinopropan-1-one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butan-1-one. Such photopolymerization initiators are commercially available under trade names, for example, Omnirad 907, Omnirad 369, Omnirad 184, Omnirad 379, Omnirad 819, and Omnirad TPO available from IGM Resins B. V.; and DETX available from Lamberti S.p.A. These photopolymerization initiators can be used alone or in combination.

The content of the photopolymerization initiator in the ink composition is preferably 1 to 20% by mass, more preferably 2 to 15% by mass, further more preferably 2 to 13% by mass. Such a range of content of the photopolymerization initiator in the ink composition preferably results in sufficient curing of the ink composition and compatibility between satisfactory internal curability and material costs. In addition, since the inventive ink composition contains the epoxidized oil or fat described later, the curability is improved upon irradiation with ultraviolet rays, thereby the content of the photopolymerization initiator can be reduced compared to conventional ink compositions. Accordingly, it is preferred that the amount of the photopolymerization initiator used is appropriately reduced in view of the actual conditions for printing.

### [Coloring ingredient]

Coloring ingredients may be added to the inventive ink composition as needed. The coloring ingredient is added to impart, for example, coloring power and hiding power to the ink composition, and includes color pigments, white pigments, and metal powder. Examples of such coloring ingredients include, but not limited to, conventional organic and/or inorganic pigments employed in ink compositions. The inventive ink composition containing no coloring ingredients is preferably used for applications, such as coating layer.

Examples of the coloring ingredients include yellow pigments, such as Disazo Yellows (Pigment Yellow 12, Pigment Yellow 13, Pigment Yellow 14, Pigment Yellow 17 and Pigment Yellow 1) and Hansa Yellow; magenta pigments, such as Brilliant Carmine 6B, Lake Red C, and Watching Red; cyan pigments, such as phthalocyanine blue, phthalocyanine green and alkali blue; black pigments, such as carbon black; white pigments, such as titanium oxide; and metal powder, such as aluminum paste and bronze powder.

The content of coloring ingredients is, for example, about 1 to 30% by mass in the entire ink composition, although such a content is not essential. Colored ink compositions may also be prepared in combination of other complementary color ingredients or other complementary colored ink compositions.

### [Other ingredients]

The inventive ink composition may further contain any other ingredient, as needed, in addition to the ingredients described above. Examples of such ingredients include extender pigments, resin ingredients, polymerization inhibitors, dispersants, salts such as phosphates, waxes such as polyethylene wax, olefin wax and Fischer-Tropsch wax, and alcohols.

The extender pigments impart appropriate properties, such as printability and viscoelasticity to ink compositions, and various types of extender pigments commonly used in the preparation of ink compositions can be employed. Examples of the extender pigments include clay, kaolinite (kaolin), barium sulfate, magnesium sulfate, calcium carbonate, silicon oxide (silica), bentonite, talc, mica, and titanium oxide. The content of such extender pigments is, for example, about 0 to 33% by mass in the entire ink composition, although such a content is not essential.

The resin ingredients impart appropriate properties, such as printability and viscoelasticity, to ink compositions. Such resin ingredients include various resins that have been conventionally used in the ink compositions for printing, and preferably have compatibility with monomers and oligomers. Examples of the resin ingredients include styrene-acrylic resins, acrylic resins, alkyd resins, rosin-modified phenol resins, rosin-modified maleic resins, rosin-modified alkyd resins, rosin-modified petroleum resins, rosin ester resins, petroleum resin-modified phenol resins, vegetable oil-modified alkyd resins, and petroleum resins.

In the case that the resin ingredient is added to the ink composition, the content of the resin ingredient in the ink composition is preferably 1 to 30% by mass, more preferably 1 to 20% by mass, further more preferably 1 to 10% by mass. Such a range of content of the resin ingredient preferably imparts appropriate viscoelasticity to the ink composition to prevent the occurrence of misting, and achieves high curability of the ink composition.

Examples of the polymerization inhibitors preferably include phenol compounds such as butylhydroxytoluene, tocopherol acetate, nitrosamine, benzotriazole, and hindered amine. More preferred is butylhydroxytoluene. The addition of such polymerization inhibitors to the ink composition can prevent an increase in viscosity of the ink composition caused by the progress of polymerization reaction during storage. The content of the polymerization inhibitor is, for example, about 0.01 to 1% by mass in the ink composition.

The dispersants are used to improve the dispersion of the coloring ingredients and extender pigments contained in the ink composition. Various types of dispersants are commercially available, for example, DISPERBYK^{™} series available from BYK Japan KK.

The inventive ink composition can be produced with the ingredients described above by a well-known process. For example, such a process involves the following steps of: mixing each ingredient described above; kneading the ingredients with, for example, a bead mill or a three-roll mill to disperse the pigments (i.e., the coloring ingredients and the extender pigments); optionally adding additives (e.g., polymerization inhibitors, alcohols, or waxes); and then adjusting the viscosity by the addition of monomer ingredients or oil ingredients. The viscosity of the ink composition for offset printing is, for example, 10 to 70 Pa s as measured with a Laray viscometer at 25°C, although such a value is not essential.

### <Process for producing actinic-ray-curable ink composition>

One aspect of the present invention also provides a process for producing the actinic-ray-curable ink composition. The inventive process for production is characterized by use of epoxidized oil or fat produced by epoxidation of oil or fat having a peroxide value of 1 meq/kg or more as part of the ingredients constituting the ink composition. Since such epoxidized oil or fat has already been explained, the redundant description is omitted in this paragraph.

In addition, it is preferred to employ the waste edible oil as the oil or fat to be subjected to epoxidation as described above from the viewpoint of reductions in environmental loads of the product. In this case, the waste edible oil includes salad oil, corn oil, olive oil, soybean oil, maize oil, sunflower oil, canola oil, rapeseed oil, safflower oil, fish oil, and beef tallow oil.

### EXAMPLES

The present invention will be described in further detail by way of the following examples, although the present invention should not be limited to these examples.

Potato slices with a thickness of 1 mm were placed into 500 mL of commercially available edible oil, and were heat-cooked at 180°C. This operation was repeated 5 to 100 times to prepare samples of waste edible oil having different peroxide values (POV). In such preparation, five waste edible oils, OL1 to OL5, were prepared through variations in the type of cooking oil and the number of heat-cooking cycles. Three waste vegetable oils, OL6 to OL8, were purchased from a recycler of waste oils. Furthermore, fresh edible oils (i.e., commercially available oils), OL9 to OL12, that were not used in the heat-cooking described above were prepared. Tables 1 and 2 illustrate the specifications of OL1 to OL12. OL1 and OL2 are derived from salad oil available from The Nisshin OilliO Group, Ltd. (i.e., OL9 described later), OL3 is derived from corn oil available from Ajinomoto Co., Inc. (i.e., OL10 described later), OL4 is derived from olive oil available from Ajinomoto Co., Inc. (i.e., OL11 described later), and OL5 is derived from white refined soybean oil available from The Nisshin OilliO Group, Ltd. (i.e., OL12 described later). OL9 is salad oil available from The Nisshin OilliO Group, Ltd., OL10 is corn oil available from Ajinomoto Co., Inc., OL11 is olive oil available from Ajinomoto Co., Inc., and OL12 is white refined soybean oil available from The Nisshin OilliO Group, Ltd.

OL1 to OL12 were epoxidized by a known process so as to have an oxirane oxygen concentration in the range of 0.5 to 30% to prepare epoxidized oils or fats, EPOL1 to EPOL12, respectively. A commercially available epoxidized soybean oil was denoted to EPOL13. Tables 3 and 4 illustrate the specifications of EPOL1 to EPOL13.

**[Table 1]**

| | OL1 | OL2 | OL3 | OL4 | OL5 |
|---|---|---|---|---|---|
| Iodine value | N/A | N/A | N/A | N/A | N/A |
| Peroxide value (meq/kg) | 30 | 300 | 100 | 250 | 700 |
| Oxirane oxygen conc. (%) | 1 or less | 1 or less | 1 or less | 1 or less | 1 or less |
| Acid value (mg KOH/g) | 5 | 12 | 8 | 9 | 25 |

**[Table 2]**

| | OL6 | OL7 | OL8 | OL9 | OL10 | OL11 | OL12 |
|---|---|---|---|---|---|---|---|
| Iodine value | 120 | N/A | N/A | 120 | 133 | 85 | 122 |
| Peroxide value (meq/kg) | 30 | 120 | 300 | below 1 | below 1 | below 1 | below 1 |
| Oxirane oxygen conc. (%) | 1 or less | 1 or less | 1 or less | below 1 | below 1 | below 1 | below 1 |
| Acid value (mg KOH/g) | 5 | 12 | 8 | below 0.1 | below 0.1 | below 0.1 | below 0.1 |

**[Table 3]**

| | EPOL1 | EPOL2 | EPOL3 | EPOL4 | EPOL5 | EPOL13 |
|---|---|---|---|---|---|---|
| Iodine value | N/A | N/A | N/A | N/A | N/A | 3 |
| Peroxide value (meq/kg) | 30 | 300 | 100 | 250 | 700 | below 1 |
| Oxirane oxygen conc. (%) | 3.2 | 0.7 | 2.9 | 1.5 | 0.2 | 8.5 |
| Acid value (mg KOH/g) | 7 | 9.3 | 9.1 | 10 | 32 | below 0.1 |

**[Table 4]**

| | EPOL6 | EPOL7 | EPOL8 | EPOL9 | EPOL10 | EPOL11 | EPOL12 |
|---|---|---|---|---|---|---|---|
| Iodine value | N/A | N/A | N/A | 5 | 4 | 5 | 12 |
| Peroxide value (meq/kg) | 30 | 120 | 300 | below 1 | below 1 | below 1 | below 1 |
| Oxirane oxygen conc. (%) | 2.9 | 2.2 | 0.5 | 7.2 | 6.9 | 5.2 | 3.1 |
| Acid value (mg KOH/g) | 6.5 | 13.2 | 8.6 | below 0.1 | below 0.1 | below 0.1 | below 0.1 |

Ink compositions of Examples 1 to 9 and Comparative Examples 1 to 6 were prepared with the epoxidized oils or fats of EPOL1 to EPOL13 shown in Tables 3 and 4. In the preparation of ink compositions, the ingredients shown in Tables 5 and 6 were mixed and then kneaded in a three-roll mill. In Tables 5 and 6, amounts of the compounded ingredients are each represented by parts by mass. "Epoxidized oil or fat" is any one of EPOL 1 to 13 described above, and which oil or fat was employed in the preparation is described together with the amount. "DiTMPTA" indicates ditrimethylolpropane tetraacrylate, "TPO" indicates 2,4,6-trimethylbenzoyl-diphenyl phosphine oxide, and "EAB" indicates 4,4'-bis(diethylamino)benzophenone. "Carbon black" is MA-70 available from Mitsubishi Chemical Co., Ltd., and "Calcium carbonate" is Hakuenka DD available from Shiraishi Calcium Kaisha, Ltd. "Varnish" in Tables 5 and 6 is prepared through mixing polydiallyl phthalate (20 parts by mass, available from Osaka Soda Co., Ltd., trade nameA-DAP), DiTMPTA (79 parts by mass) and methylhydroquinone (1 part by mass), and then heating the mixture at 100°C for 60 minutes for dissolution. Examples 1 to 8 and Comparative Examples 1 to 5 correspond to ink compositions that employ ultraviolet rays as the actinic rays and contain photopolymerization initiators (TPO and EAB), while Example 9 and Comparative Example 6 correspond to ink compositions that employ electron beams as the actinic rays and are free of photopolymerization initiators.

### [Evaluation of flowability]

For each of the ink compositions in Examples and Comparative Examples, the flow slope value as an index of the flowability was measured with a spread meter. The flow slope value is given by subtracting the spread diameter in mm measured after 10 seconds from the spread diameter in mm measured after 100 seconds with the spread meter, and a larger flow slope value indicates higher flowability. The flow slope values calculated are shown in the column "Flowability" of Tables 5 and 6.

### [Evaluation of gloss]

For each of the ink compositions in Examples 1 to 8 and Comparative Examples 1 to 5, 0.1 mL of ink composition was spread onto coated paper (Aurora Coat, available from Nippon Paper Industries Co., Ltd.) with an RI drawdown machine (Two-split roll, available from Akira Seisakusho Co., Ltd.) and then cured by irradiation with ultraviolet rays in an irradiation dose of 40 mJ/cm² or 24 mJ/cm² at an output of 120 W/cm using a metal halide lamp. The density of ink composition was adjusted such that the density immediately after curing exhibited 1.50, the density being measured with a Spectroeye densitometer (available from GretagMacbeth GmbH). The 60°-reflected gloss of each spread surface was determined with a Murakami digital gloss meter (available from Murakami Color Research Laboratory). The results are shown in the column "Gloss" of Tables 5 and 6. For each of the ink compositions in Example 9 and Comparative Example 6, the gloss was evaluated as in the ink compositions of Examples 1 to 8 and Comparative Examples 1 to 5, except that the compositions were cured by irradiation with electron beams from an electron beam irradiator (accelerating voltage: 90 kV, irradiation light dose: 30 kGy), in place of irradiation with ultraviolet rays. The results are shown in the column "Gloss" of Tables 5 and 6.

### [Evaluation of rubbing resistance]

Each of the ink compositions of Examples 1 to 8 and Comparative Examples 1 to 5 was spread on synthetic paper with a hand proofer of 800 Ipi to prepare a test piece, which was then irradiated with ultraviolet rays having 80 mJ at an output of 120 W/cm using a metal halide lamp to cure the ink composition. The rubbing resistance for each test piece was subsequently evaluated with a Gakushin-type rubbing fastness tester. The conditions of evaluation for the rubbing resistance include the reciprocation of rubbing of 200 cycles with a weight of 500 g through a pressing cloth (Canequim No. 3), and visual observation of the state of coated film after the reciprocation of rubbing. The evaluation criteria are as follows, and the results are shown in the column "Rubbing resistance" of Tables 5 and 6. The ink compositions in Example 9 and Comparative Example 6 were also subjected to evaluation of the rubbing resistance as in the ink compositions of Examples 1 to 8 and Comparative Examples 1 to 5, except that the compositions were cured by irradiation with electron beams from an electron beam irradiator (accelerating voltage: 90 kV, irradiation light dose: 30 kGy), in place of irradiation with ultraviolet rays.
5: No scratches were observed on the surface of cured film.
4: Some scratches were observed on the surface of cured film.
3: The cured film was partly removed, and the underlying synthetic paper was observed.
2: More than half part of the cured film was removed, and more than half part of the underlying synthetic paper was observed.
1: Whole part of the cured film was removed.

**[Table 5]**

| | Example 1 | Example 2 | Example 3 | Example 4 | Example 5 | Example 6 | Example 7 |
|---|---|---|---|---|---|---|---|
| Carbon black | 22 | 22 | 22 | 22 | 22 | 22 | 22 |
| Calcium carbonate | 10 | 10 | 10 | 10 | 10 | 10 | 10 |
| Vanish | 33 | 33 | 33 | 33 | 33 | 33 | 33 |
| DiTMPTA | 14 | 14 | 14 | 14 | 14 | 14 | 14 |
| Epoxidized oil or fat | EPOL1; 10 | EPOL2; 10 | EPOL3; 10 | EPOL4; 10 | EPOL5; 10 | EPOL6; 10 | EPOL7; 10 |
| TPO | 8 | 8 | 8 | 8 | 8 | 8 | 8 |
| EAB | 3 | 3 | 3 | 3 | 3 | 3 | 3 |
| Total | 100 | 100 | 100 | 100 | 100 | 100 | 100 |
| Flowability (mm) | 12.3 | 11.9 | 12.5 | 11.8 | 13.5 | 13.4 | 14.5 |
| Gloss (40mJ/m²) | 60 | 55 | 54 | 55 | 58 | 56 | 58 |
| Gloss (24mJ/m²) | 54 | 55 | 56 | 55 | 56 | 54 | 60 |
| Rubbing resistance | 5 | 5 | 5 | 5 | 5 | 5 | 5 |

**[Table 6]**

| | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|
| Carbon black | 22 | 22 | 22 | 22 | 22 | 22 | 22 | 22 |
| Calcium carbonate | 10 | 10 | 10 | 10 | 10 | 10 | 10 | 10 |
| Vanish | 33 | 33 | 33 | 33 | 33 | 33 | 33 | 33 |
| DiTMPTA | 14 | 25 | 14 | 14 | 14 | 14 | 14 | 25 |
| Epoxidized oil or fat | EPOL8; 10 | EPOL1; 10 | EPOL9; 10 | EPOL10; 10 | EPOL11; 10 | EPOL12 ;10 | EPOL13; 10 | EPOL9; 10 |
| TPO | 8 | | 8 | 8 | 8 | 8 | 12 | |
| EAB | 3 | | 3 | 3 | 3 | 3 | 3 | |
| Total | 100 | 100 | 100 | 100 | 100 | 100 | 104 | 100 |
| Flowability (mm) | 13.2 | 12.3 | 4.2 | 3.5 | 3.4 | 4.5 | 4.3 | 4.2 |
| Gloss (40mJ/m²) | 57 | | 31 | 31 | 32 | 32 | 33 | |
| Gloss (24mJ/m²) | 58 | | 33 | 37 | 31 | 31 | 31 | |
| Gloss (30 kGy) | | 62 | | | | | | 28 |
| Rubbing resistance | 5 | 5 | 3 | 3 | 3 | 3 | 3 | 3 |

Tables 5 and 6 demonstrate that the inventive ink compositions of Examples 1 to 8 exhibited higher flowability and superior gloss of cured film compared to the ink compositions of Comparative Examples 1 to 5, which contain no epoxidized oil derived from waste edible oil. The inventive ink compositions also exhibited higher rubbing resistance of the cured film compared to the ink compositions of Comparative Examples 1 to 5, which contain no epoxidized oil derived from waste edible oil. Such trends can also hold even in the case that electron beams are employed as the actinic rays, and the inventive ink composition of Example 9 exhibited higher flowability, superior gloss of cured film and higher rubbing resistance of cured film compared to Comparative Example 6, which contains no epoxidized oil derived from waste edible oil. These results described above can confirm the usefulness of the inventive ink compositions containing the epoxidized oil or fat.

## Claims

1. An actinic-ray-curable ink composition comprising a compound having an ethylenically unsaturated bond and epoxidized oil or fat, wherein the epoxidized oil or fat has a peroxide value of 1 meq/kg or more

2. The actinic-ray-curable ink composition according to claim 1, wherein the epoxidized oil or fat has an acid value of 0.1 mg KOH/g to 100 mg KOH/g.

3. The actinic-ray-curable ink composition according to claim 1 or 2, wherein the epoxidized oil or fat has a peroxide value of 1 meq/kg to 1,000 meq/kg.

4. The actinic-ray-curable ink composition according to any one of claims 1 to 3, wherein the epoxidized oil or fat has an oxirane oxygen concentration of 0.5% to 50%.

5. The actinic-ray-curable ink composition according to any one of claims 1 to 4, wherein the ink composition contains 1% by mass to 30% by mass of the epoxidized oil to the entire ink composition.

6. The actinic-ray-curable ink composition according to any one of claims 1 to 5, wherein the epoxidized oil or fat is epoxy-modified waste edible oil.

7. A process for producing an actinic-ray-curable ink composition, wherein epoxidized oil or fat prepared through epoxidation of oil or fat having a peroxide value of 1 meq/kg or more is used as part of ingredients constituting the ink composition.

8. The process for producing an actinic-ray-curable ink composition according to claim 7, wherein the oil or fat is waste edible oil.
